(19) Europäisches Patentamt

European Patent Office

Office européen des brevets

(11) Veröffentlichungsnummer: **0 304 616 B1**

(12) **EUROPÄISCHE PATENTSCHRIFT**

(45) Veröffentlichungstag der Patentschrift: **28.10.92**

(21) Anmeldenummer: **88111626.3**

(22) Anmeldetag: **19.07.88**

(51) Int. Cl.⁵: **C09K 3/14**

(54) **Schleifmittel.**

(30) Priorität: **24.07.87 CH 2830/87**
**31.08.87 CH 3334/87**

(43) Veröffentlichungstag der Anmeldung:
**01.03.89 Patentblatt 89/09**

(45) Bekanntmachung des Hinweises auf die
Patenterteilung:
**28.10.92 Patentblatt 92/44**

(84) Benannte Vertragsstaaten:
**AT CH DE ES FR GB GR IT LI NL SE**

(56) Entgegenhaltungen:
**DE-A- 336 430**    **DE-A- 366 944**
**DE-A- 1 577 577**    **DE-C- 666 845**
**FR-A- 2 209 823**    **US-A- 2 301 123**

(73) Patentinhaber: **LONZA A.G.**
**Münchensteinerstrasse 38**
**CH-4002 Basel Postfach(CH)**

(72) Erfinder: **Kunz, Reiner, Dr.**
**Königsbergerstrasse 33**
**W-7890 Waldshut-Tiengen(DE)**
Erfinder: **Babl, Albert, Dipl.-Ing. (FH)**
**Lindenstrasse 4**
**W-7891 Dogern(DE)**
Erfinder: **Zahradnicek, Ales, Dr. Dipl.-Ing.**
**Sonnhalde 33**
**W-7892 Albbruck(DE)**
Erfinder: **Dietrich, Rainer, Dr.**
**Thiersteinerrain 65**
**CH-4059 Basel/Schweiz(CH)**

(74) Vertreter: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

**Beschreibung**

Die Erfindung betrifft ein oberflächenbehandeltes Schleifkorn auf Basis von Aluminiumoxid sowie ein daraus hergestelltes, insbesondere ein auf eine Unterlage aufgebrachtes Schleifmittel.

Es sind Schleifmittel in Form eines Schleifpapiers bekannt, die zwischen den einzelnen Schleifkörnern grosse Leerräume aufweisen und die Schneidespitzen aller Schleifkörner in derselben Ebene liegen, die parallel zur Ebene einer Unterlage verläuft. Um das zu erreichen, wird auf eine Unterlage eine Kunstharz- oder Leimschicht aufgetragen und sodann eine Anzahl von Schleifkörnern auf elektrostatischem Weg entgegen der Schwerkraft eingestreut und somit aufgerichtet in eine erste Leimschicht eingesetzt (DE-OS 21 25 942).

Es hat sich als nachteilig herausgestellt, dass die blossen Schleifkörner in solchen Herstellungsverfahren im elektrischen Feld ein schlechtes Spring- und Ausrichtverhalten zeigen. Beispielsweise in der genannten DE-OS 21 25 942 wird vorgeschlagen, das Abfallen der Körner von der Unterlage, wegen einer zu geringen Stärke der elektrostatischen Aufladung, dadurch zu unterbinden, dass ein dünner Film einer hochviskosen Substanz aufgetragen wird, die die Körner solange festhält, bis sie in die Leimschicht eingebettet sind.

Andere Nachteile, die bei elektrostatischen Beschichtungsverfahren auftreten, waren, dass die Spannung im elektrischen Feld stark erhöht werden muss und damit unerwünschte elektrische Entladungen auftreten oder eine erhöhte relative Luftfeuchtigkeit im Verarbeitungsbereich notwendig wird.

Alle diese Massnahmen können aber nicht verhindern, dass die Beschichtung der Unterlage mit Schleifkörnern meistens unregelmässig ist und zu hohen Ausschussraten führt, da auch innerhalb der Produktionschargen eines Schleifmittels wesentliche Unterschiede im Springverhalten festgestellt wurden und somit die Produktionsleistung stark vermindert wird.

Ein weiterer Nachteil war, dass die Festigkeit der Einbindung der Schleifkörner in der Unterlage ungenügend war, was dazu führte, dass Einbussen in der Schleifleistung solcher Schleifmittel in Kauf genommen werden mussten.

Aufgabe der vorliegenden Erfindung ist es, ein Schleifkorn zur Verfügung zu stellen, das diese Nachteile nicht aufweist.

Erfindungsgemäss wurde dies dadurch erreicht, dass das Schleifkorn mit einer hygroskopischen und/oder hydrophilen Substanz oberflächlich behandelt ist, wobei die Substanzmenge 0,001 bis 5,0 Gew.%, bezogen auf die Menge des Schleifkorns, beträgt. Vorzugsweise beträgt die Substanzmenge 0,1 bis 0,5 Gew.%, bezogen auf die Menge des Schleifkorns.

Um zu ermitteln, ob das Schleifkorn die geforderten Eigenschaften aufweist, hat es sich als zweckmässig erwiesen, den spezifischen Widerstand des Schleifkorns in Kornschüttungen zu bestimmen. Zweckmässig liegt dieser spez. Widerstand bei kleiner als $3,5 \times 10^{10}$ Ohm x cm, vorzugsweise zwischen $0,05 \times 10^{10}$ und $2,5 \times 10^{10}$ Ohm x cm.

Gemäss vorliegender Erfindung ist ein Schleifkorn auf Basis von Aluminiumoxid im Mikro- und insbesondere im Makrobereich gemäss FEPA-Standard geeignet. Als Schleifkörner auf Basis von Aluminiumoxid werden Korunde, wie Edelkorund, Halbedelkorund, Normalkorund, hochtemperatur-behandelter Blaukorund, Zirkonkorund, Sinterkorund oder entsprechende Ein- oder Mehrphasenzusammensetzungen, verstanden. Es können auch Mischungen verschiedener Korunde, wie z.B. Edelkorund, Blaukorund, Zirkonkorund, Sinterkorund, eingesetzt werden.

Die genannte Schleifkörner müssen, um den erfindungsgemässen Zweck zu erreichen, mit einer hygroskopischen und/oder hydrophilen Substanz beschichtet sein.

Als hygroskopische Substanz kann ein Carbonat, Hydrogencarbonat, Sulfat, Nitrat, Phosphat, Fluorid oder Chlorid der Metalle der 1., 2. oder 3. Hauptgruppe oder der 1. oder 2. Reihe der Uebergangsmetalle des Periodensystems, zweckmässig aber Natriumcarbonat, Natriumhydrogencarbonat, Magnesiumchlorid, Calciumnitrat, Eisenchlorid, jeweils allein oder im Gemisch, eingesetzt werden.

Als hydrophile Substanzen kommen feinstteilige Metalloxide, wie Siliciumdioxid, Aluminiumoxid oder Titandioxid, jeweils allein oder im Gemisch untereinander, zur Anwendung.

Die feinstteiligen Metalloxide haben eine Partikelgrösse der Primärteilchen im $d_{50}$ Wert von zweckmässig 1 bis 500 nm, vorzugsweise 10 bis 50 nm, und eine spezifische Oberfläche zwischen zweckmässig 5 bis 500 m2/g, vorzugsweise 50 bis 380 m2/g.

Gemische in beliebigen Verhältnissen von hygroskopischen und hydrophilen Substanzen können ebenfalls eingesetzt werden, sofern die angegebenen Mengenbereiche eingehalten werden.

Abhängig von der Beschichtung können die Schleifkörner für unterschiedliche Zwecke eingesetzt werden.

Schleifkörner auf Basis von Aluminiumoxid, die mit einer hygroskopischen und/oder hydrophilen Substanz beschichtet sind, eignen sich besonders zum gleichmässigen Beschichten einer, einen Haftvermittler aufweisenden Unterlage im elektrischen Feld.

Für diese Verwendung können nicht nur einheitliche Aluminiumoxid- bzw. Korundsorten, sondern auch beliebige Mischungen verschiedener Korunde eingesetzt werden, die sonst aufgrund des unterschiedlichen Springverhaltens der Einzelkomponenten im elektrischen Feld nicht verwendbar sind. Nach der erfindungsgemässen Behandlung zeigen auch diese Mischungen ein einheitliches Springverhalten.

Mit Schleifmitteln, die auf einem Schleifkorn basieren, das mit einer möglichst feinteiligen hydrophilen Substanz behandelt ist, wird zusätzlich eine ausgezeichnete Einbindung oder Haftung des Schleifkorns auf einer flexiblen Unterlage oder in Schleifmitteln mit Kunstharzbindung erreicht. Solche Schleifmittel eignen sich daher besonders für Schleifbänder und Schleifscheiben, die eine hohe Schleifleistung bringen müssen.

Als Unterlage kommen vorteilhaft bekannte Materialien wie Papier, Kunststoffe, Leinen oder faserverstärkte Gewebearten zur Anwendung. Ein Haftvermittler wird in der Regel einseitig auf diese Unterlage aufgebracht.

Als Haftvermittler bieten sich die gebräuchlichen Leime oder Klebstoffe wie Holzleim, Bakelit, Phenol-, Aldehyd-, Harnstoff-, Formaldehyd-, Epoxy-, Polyester- oder Polyurethanharze an.

Vor dem Aufbringen auf die Unterlage wird das Schleifkorn erfindungsgemäss mit einer hygroskopischen und/oder hydrophilen Substanz behandelt, Dazu werden die hygroskopischen Substanzen gelöst, die hydrophilen Substanzen, soweit nicht löslich, in einem Träger suspendiert und in diese Lösung oder Suspension das Schleifkorn oder die genannten Gemische verschiedener Korunde hineingegeben und durch Trocknen, beispielsweise durch Eintrocknen lassen, durch Verdampfen oder Sprühtrocknen das Lösungsmittel oder der Träger entfernt. Die einzelnen Bestandteile müssen so ausgewogen werden, dass sich ein beschichtetes Schleifkorn mit den erfindungsgemässen Anteilen an Schleifkorn und an Substanz ergibt.

Eine weitere Verarbeitungsmöglichkeit für die hochdispersen hydrophilen Substanzen besteht darin, dass das Schleifkorn in einen Mischer (Taumelmischer, Drehmischer, Freifallmischer) gegeben und mit der beispielsweise aus der Reihe der genannten Materialien ausgewählten Substanz oder einem Gemisch aus dieser Reihe trocken gemischt wird.

Durch die entsprechende Wahl der Menge Schleifkorn zu Substanz wird das erfindungsgemässe Gewichtsverhältnis eingestellt.

Das behandelte Schleifkorn kann dann den an sich bekannten Beschichtungsvorrichtungenzugeführt und darin wie bekannt verarbeitet werden.

Anhand der Vergleichsversuche wird gezeigt, dass einerseits die Streufähigkeit und anderseits auch die Schleifleistung, von entsprechend hergestellten Schleifmitteln, deutlich verbessert werden kann.

Beispiele

Beispiel 1

Es wurde ein hochtemperaturbehandelter Normalkorund (Dural HT) der Körnung 36 und 60 nach FEPA-Norm aus unterschiedlichen Produktionschargen verwendet, die jeweiligen Probemengen halbiert und die eine Hälfte erfindungsgemäss mit 0,2 Gew.% hochdispersem $Al_2O_3$ ($d_{50}$ = 20 nm, BET = 100 ± 15 m2/g) durch Aufschlämmen in Wasser und Eintrocknen bei 200°C hergestellt. Die Streufähigkeit wurde in einem Labortestgerät unter konstant gehaltenen Bedingungen getestet, wobei als Mass für die Streufähigkeit der Gew.%-Anteil, der auf einem Klebeband anhaftenden Körner genommen wurde, die dazu von einer Unterlage im elektrischen Feld entgegen der Schwerkraft an das Klebeband springen mussten. Die spez. Widerstandswerte wurden mit konstant gehaltenen Bedingungen in zylindrischen Kornschüttungen (Durchmesser 30 mm, Kornmenge 2 g) gemessen.

Messgerät: Kurbelinduktor 5.000 V, Messbereich 1 x $10^6$ bis 4 x $10^9$ Ohm.

Die Ergebnisse zeigt Tabelle I.

Tabelle I

| Dural HT Korn 36 | | | unbehandelt | behandelt mit 0,2% $Al_2O_3$ |
|---|---|---|---|---|
| A | | spez.Widerstand Ohm x cm<br>Streufähigkeit % | $>12 \times 10^{10}$<br>8 | $0,4 \times 10^{10}$<br>92 |
| B | | spez.Widerstand Ohm x cm<br>Streufähigkeit % | $>12 \times 10^{10}$<br>12 | $0,2 \times 10^{10}$<br>96 |
| C | | spez.Widerstand Ohm x cm<br>Streufähigkeit % | $>12 \times 10^{10}$<br>0 | $1,0 \times 10^{10}$<br>96 |
| Dural HT Korn 60 | | | | |
| D | | spez.Widerstand Ohm x cm<br>Streufähigkeit % | $>12 \times 10^{10}$<br>4 | $0,9 \times 10^{10}$<br>96 |
| E | | spez.Widerstand Ohm x cm<br>Streufähigkeit % | $\geq 12 \times 10^{10}$<br>54 | $0,6 \times 10^{10}$<br>96 |
| F | | spez.Widerstand Ohm x cm<br>Streufähigkeit % | $>12 \times 10^{10}$<br>12 | $0,9 \times 10^{10}$<br>94 |

Beispiel 2

Es wurde wie bei Beispiel 1 vorgegangen, nur mit Halbedelkorund als Schleifkorn, und es wurde behandelt mit 0,2 Gew.% $Al_2O_3$ durch Trockenmischung.
Die Ergebnisse zeigt Tabelle II.

Tabelle II

| Halbedelkorund Korn 36<br>(Abramant®) | | | unbehandelt | behandelt mit 0,2% $Al_2O_3$ |
|---|---|---|---|---|
| A | | spez.Widerstand Ohm x cm<br>Streufähigkeit % | $\geq 12 \times 10^{10}$<br>26 | $0,4 \times 10^{10}$<br>96 |
| B | | spez.Widerstand Ohm x cm<br>Streufähigkeit % | $\geq 12 \times 10^{10}$<br>32 | $1,5 \times 10^{10}$<br>96 |
| C | | spez.Widerstand Ohm x cm<br>Streufähigkeit % | $10 \times 10^{10}$<br>50 | $0,6 \times 10^{10}$<br>97 |

Beispiel 3

Es wurden Dural HT Korn 60 Proben mit hygroskopischen Substanzen (0,5 Gew.%) durch Auflösen der Substanzen in Wasser, Zugabe der Schleifmittel und Eindampfen bei 200°C hergestellt. Die Streufähigkeit wurde hier nicht mehr explizit gemessen, da der spez. Widerstand als Mass ausreichend ist. Die Ergebnisse zeigt Tabelle III.

Tabelle III

| Dural HT Korn 60 | unbehandelt | behandelt |
|---|---|---|
| Subst.$FeCl_3$ | $12 \times 10^{10}$ Ohm x cm | $< 0,02 \times 10^{10}$ Ohm x cm |
| $NaHCO_3$ | $12 \times 10^{10}$ Ohm x cm | $< 0,02 \times 10^{10}$ Ohm x cm |
| $MgCl_2$ | $12 \times 10^{10}$ Ohm x cm | $< 0,02 \times 10^{10}$ Ohm x cm |
| $Ca(NO_3)_2$ | $12 \times 10^{10}$ Ohm x cm | $< 0,02 \times 10^{10}$ Ohm x cm |

Man erkennt anhand der spez. Widerstandswerte, dass die Beladung mit hygroskopischen Substanzen wesentlich geringer als 0,5 Gew.% sein kann, um den erfindungsgemässen spez. Widerstand zu erreichen. Diesbezüglich wurde eine Probe Dural HT Korn 36 mit 0,01 Gew.% Natriumhydrogencarbonat hergestellt:

| Dural HT Korn 36 | unbehandelt | behandelt |
|---|---|---|
| $NaHCO_3$ | $> 12 \times 10^{10}$ Ohm x cm | $0,1 \times 10^{10}$ Ohm x cm |

Beispiel 4

Die Produktionscharge hochtemperaturbehandelter Blaukorund Korn 36 (Dural HT) wurde halbiert und eine Hälfte erfindungsgemäss mit 0,2 Gew.% $Al_2O_3$ (primär Partikel $d_{50}$ = 20 nm, BET = 100 ± 15 m2/g) durch Trockenmischung in einem Freifallmischer behandelt. Mit diesen Mustern wurden flexible Schleifbänder unter konstanten Bedingungen hergestellt und mit einer industriellen Bandschleifmaschine an Stahlblechkanten (Werkstoff: DIN 17222 Nr.10605), der Breite 3 mm, getestet. Als Mass für die Schleifleistung wurde die maximale bearbeitbare Gesamtkantenlänge sowie die damit verbundene Abschliffmenge der Bänder herangezogen. Die Ergebnisse zeigt Tabelle IV.

Tabelle IV

| Dural HT Korn 36 | unbehandelt | behandelt |
|---|---|---|
| Abschliffmenge in g | 930 | 1170 |
| bearb. Kantenlänge in m | 6,2 | 8,8 |

Beispiel 5

Die Produktionscharge hochtemperaturbehandelter Blaukorund Korn F 24 (Dural HT) wurde halbiert und eine Hälfte erfindungsgemäss mit 0,2 Gew.% $Al_2O_3$ (primär Partikel $d_{50}$ = 20 nm, BET = 100± 15 m2/g) durch Trockenmischung in einem Freifallmischer behandelt.
Mit diesen Mustern wurden unter konstanten Bedingungen Trennscheiben wie folgt hergestellt.
Die Zusammensetzung der Scheiben lautete:
19 Gew.% Phenolharze (Pulver und flüssig)
68 Gew.% Schleifkorn
13 Gew.% Füllstoffe.
Die körnigen Ausgangsmaterialien wurden unter Zugabe des flüssigen Phenolharzes zu einer rieselfähigen homogenen Masse verarbeitet und in einer Pressform unter Zugabe von 2 Aussengeweben in einer Presse mit einem Druck von 200 kg/cm² verpresst. Die Aushärtung der Scheiben erfolgte wie üblich in einem Ofen bei 190°C.
Die Schleifleistung wurde mit einer handeltsüblichen Trennschleifmaschine an 18/8 Chromnickelstahlflacheisen der Querschnittsdimension 50 x 20 mm ermittelt. Hierzu wurden pro Scheibe 10 Trennschnitte durchgeführt und als Mass für die Leistung der Scheibe der damit verbundene Scheibenverschleiss ermittelt. Dieser wird in "nm-Scheibendurchmesserabnahme" angegeben. Die Ergebnisse zeigt Tabelle V.

Tabelle V

| Scheibendimension in mm: 230 x 2,5 x 22<br>Flacheisen aus 18/8 Chromnickelstahl: 50 x 20 mm<br>10 Trennschnitte | | |
|---|---|---|
| Dural HT Korn F 24 | unbehandelt | behandelt |
| Durchmesserabnahme in mm | 4<br>6<br>5 | 4<br>4<br>4 |
| Durchschnitt | 5 mm | 4 mm |
| Relat.Leistungsfaktor | 100% | 120% |

**Patentansprüche**

1.  Schleifkorn auf Basis von Aluminiumoxid, dadurch gekennzeichnet, dass es mit einer hygroskopischen und/oder einer hydrophilen Substanz oberflächlich behandelt ist, wobei die Substanzmenge 0,001 bis 5,0 Gew.%, bezogen auf die Menge des Schleifkorns, beträgt.

2.  Schleifkorn nach Patentanspruch 1, dadurch gekennzeichnet, dass die Substanzmenge 0,1 bis 0,5 Gew.%, bezogen auf die Menge des Schleifkorns, beträgt.

3.  Schleifkorn nach Patentansprüchen 1 und 2, dadurch gekennzeichnet, dass der spez. Widerstand des behandelten Schleifkorns, gemessen in Kornschüttungen, kleiner als $3,5 \times 10^{10}$ Ohm x cm, vorzugsweise zwischen $0,05 \times 10^{10}$ und $2,5 \times 10^{10}$ Ohm x cm, beträgt.

4.  Schleifkorn nach Patentansprüchen 1 bis 3, dadurch gekennzeichnet, dass als hygroskopische Substanz ein Carbonat, Hydrogencarbonat, Sulfat, Nitrat, Phosphat, Fluorid oder Chlorid der Metalle der 1., 2. oder 3. Hauptgruppe oder der 1. oder 2. Reihe der Uebergangsmetalle des Periodensystems eingesetzt wird.

5.  Schleifkorn nach Patentansprüchen 1 bis 4, dadurch gekennzeichnet, dass als hygroskopische Substanz Natriumcarbonat, Natriumhydrogencarbonat, Magnesiumchlorid, Calciumnitrat oder Eisenchlorid eingesetzt wird.

6.  Schleifkorn nach Patentansprüchen 1 bis 3, dadurch gekennzeichnet, dass als hydrophile Substanz ein feinstteiliges Metalloxid mit einer Partikelgrösse der Primärteilchen im $d_{50}$ Wert von 1 bis 500 nm und einer spezifischen Oberfläche nach BET von 5 bis 500 $m^2$/g eingesetzt wird.

7.  Schleifkorn nach Patentanspruch 6, dadurch gekennzeichnet, dass als hydrophile Substanz ein feinstteiliges Metalloxid mit einer Partikelgrösse der Primärteilchen im $d_{50}$ Wert von 10 bis 50 nm und einer spez. Oberfläche nach BET von 50 bis 380 $m^2$/g eingesetzt wird.

8.  Schleifkorn nach Patentansprüchen 1,2,3,6 und 7, dadurch gekennzeichnet, dass als hydrophile Substanz ein feinstteiliges Siliciumdioxid, Aluminiumoxid oder Titandioxid eingesetzt wird.

9.  Verwendung des Schleifkorns nach Patentanspruch 1 in durch elektrostatische Beschichtung hergestellten Schleifmitteln auf Unterlage.

10. Verwendung des Schleifkorns nach Patentanspruch 1 in kunstharzgebundenen Schleifkörpern.

**Claims**

1.  Abrasive on the basis of aluminum oxide, characterized in that its surface has been treated with a hygroscopic and/or a hydrophilic substance, the amount of said substance being 0.001 to 5.0 weight%, based on the amount of the abrasive.

2. Abrasive according to patent claim 1, characterized in that the amount of said substance is 0.1 to 0.5 weight%, based on the amount of the abrasive.

3. Abrasive according to patent claims 1 and 2, characterized in that the resistivity of the treated abrasive, measured in granular mass, is smaller than $3.5 \times 10^{10}$ Ohm x cm, preferably between $0.05 \times 10^{10}$ and $2.5 \times 10^{10}$ Ohm x cm.

4. Abrasive according to patent claims 1 to 3, characterized in that as hygroscopic substance a carbonate, hydrogen carbonate, sulfate, nitrate, phosphate, fluoride or chloride of the metals from the 1rst, 2nd or 3rd main group or from the 1st or 2nd period of transition metals of the Periodic System is used.

5. Abrasive according to patent claims 1 to 4, characterized in that as hygroscopic substance sodium carbonate, sodium hydrogen carbonate, magnesium chloride, calcium nitrate or iron chloride is used.

6. Abrasive according to patent claims 1 to 3, characterized in that as hydrophilic substance a finely divided metal oxide having a particle size of the primary particles in the $d_{50}$ value of from 1 to 500 nm and a specific surface area according to BET of from 5 to 500 $m^2/g$ is used.

7. Abrasive according to patent claim 6, characterized in that as hydrophilic substance a finely divided metal oxide having a particle size of the primary particles in the $d_{50}$ value of from 10 to 50 nm and a specific surface area according to BET of from 50 to 380 $m^2/g$ is used.

8. Abrasive according to patent claims 1, 2, 3, 6 and 7, characterized in that as hydrophilic substance a finely particulate silicon dioxide, aluminum oxide or titanium dioxide is used.

9. The use of the abrasive according to patent claim 1 in abrasive agents prepared by electrostatic coating on a support.

10. The use of the abrasive according to patent claim 1 in abrasive agents bonded with a synthetic resin.

**Revendications**

1. Granule abrasif à base d'oxyde d'aluminium, caractérisé en ce qu'il est traité superficiellement avec une substance hygroscopique et/ou hydrophile, la quantité de la substance étant de 0,001 jusqu'à 5 % en poids rapportés à la quantité du granule abrasif.

2. Granule abrasif selon la revendication 1, caractérisé en ce que la quantité de substance est de 0,1 jusqu'à 0,5 % en poids rapporté à la quantité du granule abrasif.

3. Granule abrasif selon les revendications 1 et 2, caractérisé en ce que la résistance spécifique du granule abrasif traité, mesurée dans les foisonnements de granules, est inférieure à $3,5 \times 10^{10}$ Ohms x cm, de préférence entre $0,05 \times 10^{10}$ et $2,5 \times 10^{10}$ Ohms x cm.

4. Granule abrasif selon les revendications 1 à 3, caractérisé en ce qu'en tant que substance hygroscopique, on met en oeuvre un carbonate, un hydrocarbonate, un sulfate, un nitrate, un phosphate, un fluorure ou un chlorure des métaux du premier, deuxième ou troisième groupe principal ou de la première ou de la deuxième série des métaux de transition de la Classification Périodique.

5. Granule abrasif selon les revendications 1 à 4, caractérisé en ce qu'en tant que substance hygroscopique, on met en oeuvre du carbonate de sodium, de l'hydrogénocarbonate de sodiun ou bicarbonate de sodium, du chlorure de magnésium, du nitrate de calcium ou du chlorure de fer.

6. Granule abrasif selon les revendications 1 à 3, caractérisé en ce qu'en tant que substance hydrophile, on met en oeuvre un oxyde métallique à répartition fine ayant une granulométrie des particules primaires en valeur $d_{50}$ de 1 à 500 nm et une surface spécifique selon BET de 5 à 500 $m^2/g$.

**7.** Granule abrasif selon la revendication 6, caractérisé en ce qu'en tant que substance hydrophile, on met en oeuvre un oxyde métallique à répartition fine ayant une granulométrie des particules primaires en valeur $d_{50}$ de 10 à 50 nm et une surface spécifique selon BET de 50 à 380 $m^2$/g.

**8.** Granule abrasif selon les revendications 1, 2, 3, 6 et 7, caractérisé en ce qu'en tant que substance hydrophile, on met en oeuvre un dioxyde de sicilium finement divisé, un oxyde d'aluminium ou un dioxyde de titane.

**9.** Utilisation du granule abrasif selon la revendication 1, dans des moyens abrasifs sur support produit par revêtement électrostatique.

**10.** Utilisation du granule abrasif selon la revendication 1, dans des corps d'abrasion liés à la résine synthétique.